# EUROPEAN PATENT APPLICATION

(11) **EP 4 509 421 A1**
(43) Date of publication of application: **19.02.2025**
(21) Application number: 24195147.4
(22) Date of filing: 19.08.2024
(51) Int. Cl.: B65D 5/74, B32B 27/10, B65D 65/40, B65D 75/44, B65D 75/58

(54) **PACKAGING MATERIAL**

(30) Priority: 18.08.2023 EP 23192127
(71) Applicant: Tetra Laval Holdings & Finance S.A., 1009 Pully (CH)
(72) Inventor: BIERLEIN, Pär, 22186 Lund (SE); ALEX, Per, 22186 Lund (SE); DAHLGREN, Mattias, 22186 Lund (SE); KISS, Peter, 22186 Lund (SE); ALEXANDERSSON, Marcus, 22186 Lund (SE)
(74) Representative: Tetra Pak - Patent Attorneys SE

(57) **Abstract**

A piece of packaging material (100) for producing a heat-treatable package (200) is presented, which has an outer protective layer (300), a cellulose-based mid-layer (302) and an inner protective layer (304). Two sets of perforations (102; 104a,b) extend through the outer protective layer into the cellulose-based mid-layer for providing that air is allowed to enter into the cellulose-based mid-layer. The first set of perforations is provided in a top fin section (110) and the second set of perforations (104a,b) is provided outside the top fin section (110).

## Description

### Technical Field

The invention relates to packaging technology. More particularly, it is related to cellulose-based heat-treatable packages, pieces of packaging material and methods for producing the pieces and methods for producing the packages.

### Background Art

Today, it is increasingly popular to use carton-based packages instead of tin cans for food. One reason for this is the environment profile of the carton-based packages. Another reason is that the carton-based packages can be folded flat once emptied. In case the packages and the food therein should have a shelf lifetime of more than a year, it is common practice to retort the packages after these have been filled with the food. By heat-treating both the packages and the food, microorganisms that may risk to the spoil the food is removed. An example of such carton-based packages are Tetra RecartO marketed by Tetra Pak^{®}.

During retorting, the packages may be subjected to steam as well as both hot cold water. To make the packages withstand this treatment, the packaging material may comprise several layers with different properties. For instance, there may be both inner and outer polymer-based protective layers to provide for that a carton-layer, placed as one of the mid-layers of the packaging material, is protected during the heat treatment.

Even though the packaging material used today for heat-treatable packages, e.g. packages that can be treated in a retorting apparatus, also referred to as an autoclave, provide the properties needed to withstand the effects of the heat treatment, there may from time to time be packages that are negatively affected by the heat treatment. For instance, occasionally there may be packages that are negatively affected due to that water, used during the heat treatment, is absorbed by the packaging material resulting in that the packages are not providing the intended properties in terms of e.g. robustness and stiffness.

The problem of packaging material water uptake during retorting, or other heat treatment of packages involving water, is today solved by that a heat treatment program is amended to assure that there is sufficient time for the water to be removed from the packages, thereby reducing a risk of water uptake. Still a possibility to reduce the risk is to place the packages on a rack such that there is more space between the packages, and as an effect providing for that the water can be removed from the packages easily.

Even though there are ways today to provide for that the packages subjected to heat treatment involving water do not absorb water such that the properties of the packages deteriorate, there is a need to further reduce this risk such that the number of faulty packages output from the retorting apparatus or other heat treatment device can be further reduced.

### Summary

It is an object of the invention to at least partly overcome one or more of the above-identified limitations of the prior art. In particular, it is an object to reduce a risk of having water absorbed by a cellulose-based mid-layer of the packaging material, in turn resulting in packages that do not meet set quality standards due to that the packaging material, as a result of the water intake, does not provide adequate robustness and stiffness. Generally, it has been found that having two separated, that is, spaced apart, sets of perforations provide for that the risk of having water being absorbed by the cellulose-based mid-layer can be reduced. During e.g. cooling of the packages after heat-treatment, it has namely been found that a pressure difference between an inside pressure, that is, a pressure inside the package, and an outside pressure, that is, a pressure in a compartment of a heat treatment apparatus arranged to hold the packages, provide for that water may be sucked into the cellulose-based mid-layer as an effect of an air flow, more generally gas flow, caused by the pressure difference. By having two separated sets of perforations, the risk can be mitigated, thereby resulting in fewer packages that do not meet the quality standards due to water intake in the cellulose-based mid-layer.

According to first aspect it is provided a piece of packaging material for producing a heat-treatable package, said piece comprising an outer protective layer, a cellulose-based mid-layer, an inner protective layer, a first set of perforations extending through the outer protective layer into the cellulose-based mid-layer, a second set of perforations extending through the outer protective layer into the cellulose-based mid-layer, wherein the first and second set of perforations provide for that air is allowed to enter into the cellulose-based mid-layer, wherein the first set of perforations is provided in a top fin section, wherein the second set of perforations is provided outside the top fin section, thereby reducing a risk that water provided on the package is sucked into the cellulose-based mid-layer in case an inside pressure of the package is lower than an outside pressure.

An advantage with the piece of packaging material described above is that the risk that water is sucked into the cellulose-based mid-layer due to the pressure difference formed during heat treatment can be reduced, thereby resulting in fewer packages that do not meet the quality standards. As used herein, a heat-treatable package means that the package is purposely arranged to and capable of being heat treated in a retorting apparatus. A heat-treatable the package is arranged to withstand heat treatment in a pasteurizer or a retorting apparatus. An example of a heat-treatable package is the package sold by Tetra Pak under the name Tetra Recart.

The inside pressure of the package being lower than an outside pressure an outer protective layer may be understood as the pressure within the cellulose-based mid-layer being lower than the outside pressure.

The first set of perforations may further be arranged to form a tearing line for facilitating opening of the package by tearing along the tearing line.

The first set of perforations may serve dual purposes. In addition to provide for that this set of perforation provide for that the pressure difference can be handled with less risk of having water sucked into the cellulose-base mid-layer, this set of perforations may also be used as a tearing line, that is, facilitating for a user to get access to the food product held in the package by tearing off a top fin of the package along the first set of perforations.

The second set of perforations may be placed in a bottom fin section or a bottom panel section of the piece.

An advantage of having the second set of perforations placed in the bottom fin section or the bottom pane section and the first set of perforations in the top fin section is that the two sets in this way are placed in two ends of the package, thereby further reducing the risk of having both covered with water during the heat treatment.

The second set of perforations may be placed in the bottom fin section or the bottom panel section such that the second set of perforations are at least partly covered by a bottom flap once the piece is formed into the package. At least 50%, or at least 75%, or at least 90%, of the second set of perforations may be covered by the bottom flap once the piece is formed into the package.

In one embodiment, the second set of perforations are fully covered by the bottom flap once the piece is formed into the package.

An advantage of having the bottom flap covering the second set of perforations is that the risk of having water covering the second set of perforations can be further reduced.

A third set of perforations may be placed in a top panel section such that the third set of perforations is at least partly covered by a top flap once the piece is formed into the package.

At least 50%, or at least 75%, or at least 90%, of the third set of perforations may be covered by the top flap once the piece is formed into the package.

In one embodiment, the third set of perforations are fully covered by the top flap once the piece is formed into the package. Having the third set of perforations and also having this covered by the top flap further reduces the risk of having water sucked into the cellulose-based mid-layer.

The piece may further comprise a polyamide layer placed between the cellulose-based mid-layer and the inner protective layer, wherein the polyamide layer is void of any perforations of the first or second set of perforations.

Having the polyamide layer without perforations provide for that the package can be heat treated in a retorting apparatus, and also that the food product held in the package can have a shelf lift of up to twelve months or more.

The piece may further comprise an Aluminum foil placed between the cellulose-based mid-layer and the inner protective layer, wherein the Aluminum foil is void of any perforations of the first or second set of perforations.

As for the polyamide layer, by having the Aluminum foil without perforations, the package can be heat treated in the retorting apparatus, and also provide for that the food product held in the package can have a shelf life of twelve months or more.

The piece may comprise both the polyamide layer as well as the Aluminum foil. The first and second set of perforations may be provided by using laser cutting.

An advantage of using laser cutting is that a depth of the perforations can be determined with a precision such that a risk of puncturing layers inside the cellulose-based mid-layer is lower compared to using other cutting technologies.

The first and second set of perforations may be separated, and the first set of perforations may extend in a first direction and the second set of perforations may extend in a second direction, wherein the first and second directions are parallel.

An advantage of having the first and second perforations extending in directions parallel to one another is that a perforation device may be set to provide perforations continuously. Put differently, the first and second perforations may extend across a full width of the piece of packaging material.

According to a second aspect it is provided a method for producing a piece of packaging material that can be formed into a heat-treatable package, said method comprising producing a web of consecutive pieces by attaching an outer protective layer and an inner protective layer to a cellulose-based layer, feeding the web into a perforation device, operating the perforation device such that a first and a second set of perforations extending through the outer protective layer into the cellulose-based mid-layer are provided for each piece, wherein the first set of perforations is provided in a top fin section, wherein the second set of perforations is provided outside the top fin section, thereby reducing a risk that water provided on the package is sucked into the cellulose-based mid-layer in case an inside pressure of the package (200) is lower than an outside pressure.

The same advantages and features described above with respect to the first aspect also apply to this second aspect.

The perforation device may be a laser cutting device.

According to a third aspect it is provided a heat treatable package produced from a piece according to the method according to the second aspect.

According to a fourth aspect it is provided a method for producing a package filled with a food product, said method comprising receiving a piece of packaging material according to the first aspect, forming the piece into the package with one end open, filling the food product into the package via the open end, closing the open end of the package such that a sealed package is formed, loading the package into a retorting apparatus, heating, in the retorting apparatus, the package and the food product held in the package such that microorganisms on the package or in the food product are killed off, cooling, in the retorting apparatus, the package and the food product held in the package by applying water onto the package, wherein the cooling provides for that a pressure difference is formed between an inside pressure of the package and an outside pressure in the retorting apparatus, wherein the risk that the water is provided on the package is sucked into the cellulose-based mid-layer as an effect of the pressure difference is reduced since a likelihood of having a direct contact between air outside the package and the cellulose-based mid-layer is increased by having two sets of perforations placed in different sections of the package.

The same features and advantages as presented above with respect to the first aspect also apply to this fourth aspect.

The loading of the package into the retorting apparatus comprises loading the package together with other packages onto a rack comprising several floors, each floor comprising horizontal rows and columns of packages, before being fed into the retorting apparatus, wherein the packages are placed to rest on one of their side panels.

By having the packages resting on their side panels in combination with having the first and second sets of perforations provided in the top fin or the top panel and the bottom fin or the bottom panel, respectively, provides for that none of the two sets of perforations are rested upon. As an effect, since water may be present on the rack, the risk of having water sucked into the cellulose-based mid-layer is further reduced.

The packages may be horizontally spaced 2 cm or less from each other.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a piece of packaging material arranged to be folded into a heat-treatable package.
Fig. 2 is a perspective view of the heat-treatable package.
Fig. 3 is a cross-sectional view of a packaging material of the piece of packaging material illustrated in fig. 1.
Fig. 4 is a side-view of a number of packages placed on a rack during heat treatment.
Fig. 5 is a flowchart illustrating a method for producing the piece of packaging material illustrated in fig. 1.
Fig. 6 is a flowchart illustrating a method for producing the package illustrated in fig. 2.
Fig. 7 generally illustrates a system for producing the piece of packaging material illustrated in fig. 1.

### Detailed Description

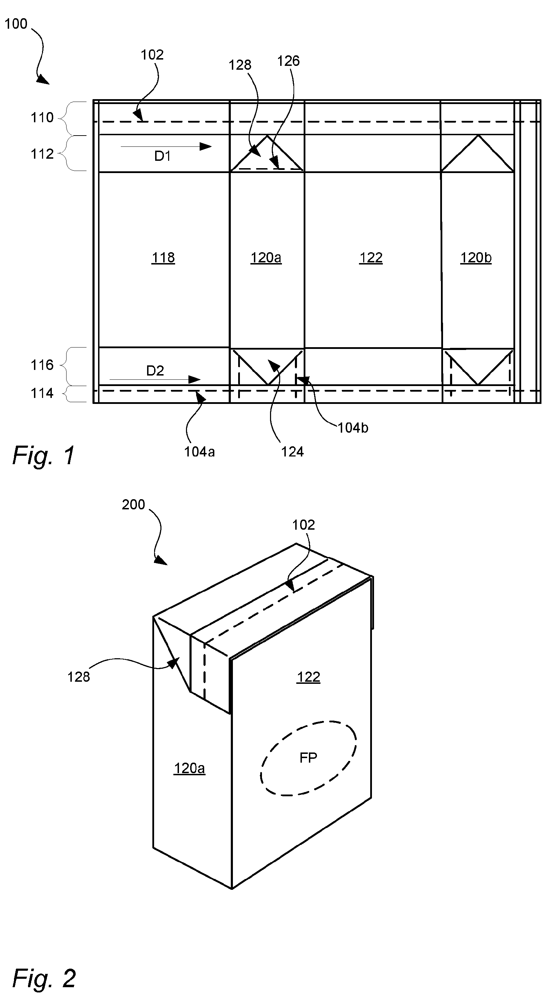

Fig. 1 generally illustrates a piece of packaging material 100 by way of example. As illustrated, the piece 100 may be provided with a first set of perforations 102 and a second set of perforations 104a,b. The first set of perforations 102 may be provided in a top fin section 110, that is, a section of the piece of packaging material that will once be folded and sealed be formed into a top fin of the package. Next to the top fin section 110, a top panel section 112 may be provided. This section may be formed into a top panel of the package once the piece of packaging material is folded and sealed.

The second set of perforations 104a may be provided in a bottom fin section 114, that is, a section of the piece of the packaging material that will be formed into a bottom fin of the package upon folding and sealing. Next to the bottom fin section 114, a bottom panel section 116 may be provided. Between the top panel section 112 and the bottom panel section 116, it can be provided a rear panel section 118, a first and a second side panel section 120a,b, and a front panel section 122.

As illustrated, the first set of perforations 102, placed in the top fin section 110, may extend in a first direction D1. The first direction D1 may be in line with a top edge as well as a bottom edge of the piece of packaging material. The second set of perforations 104a may extend in a second direction D2. As illustrated, the first and second directions D1, D2 may be parallel.

By having the first and second set of perforations 102, 104a,b placed in different parts of the piece of packaging material 100 and also, once the piece is folded into the package, in different parts of the package, a risk that both sets of perforations are covered by water during heat treatment can be reduced. By having at least one set of perforations in contact with air, or gas, inside a heat treatment apparatus, such as the retorting apparatus, a risk that water is absorbed by a cellulose-based mid-layer if an inside pressure of the package is lower than an outside pressure can be reduced. This difference in pressure between the outside pressure and the inside pressure may occur during cooling of the packages in the heat treatment apparatus.

The second set of perforations 104a,b may also, or instead, comprise perforations 104b provided on the bottom fin section 114 or the bottom panel section 116 such that the second set of perforations 104b are at least partly covered by a bottom flap 124 once the piece 100 is formed into the package.

Having the perforations covered by the bottom flap 124 may further reduce the risk that the perforations are covered by the water such that this is absorbed by the package in case the pressure difference described above occurs.

A third set of perforations 126 may be provided in the top panel section 112 such that the third set of perforations 126 are at least partly covered by a top flap 128 once the piece 100 is formed into the package.

In line with the above, having several perforations placed in different locations of the package, and also the piece of packaging material, and also having the perforations covered by the bottom flaps and/or the top flaps provide for that the risk of water absorption during heat treatment can be reduced.

Even though illustrated that the perforations extend along straight lines, this is not necessary to reduce the water absorption risk. Put differently, the first, second and/or third perforations 102, 104a,b, 126 can be provided in various forms.

The first set of perforations 102 may have dual purposes. In addition to provide for that there is contact between the air, or the gas, inside the heat treatment apparatus and the cellulose-based mid-layer of the packaging material, these perforations may also be used a tearing line for facilitating opening of the package.

Between the different sections of the piece 100 of packaging material, folding lines may be provided. These folding lines may be so-called weakening lines, i.e. lines that have been formed by pressing together the packaging material such that folding along these lines are facilitated.

Fig. 2 illustrates the package 200 formed from the piece of packaging material 100 illustrated in fig. 1. As illustrated, once the piece of packaging material 100 has been folded, filled with food product FP and sealed, a brick-shaped package may be formed. Even though the brick-shaped package comes with many advantages, such as being possible to stack on top of each other, the concepts described herein are not restricted to brick-shaped packages. For instance, instead of the illustrated brick-shaped package 200, a pillow-shaped package, having the top fin and the bottom fin, but no distinct side panels, front and rear panels, may also be provided with the first and second set of perforations to reduce the risk of water absorption due to pressure differences during heat treatment.

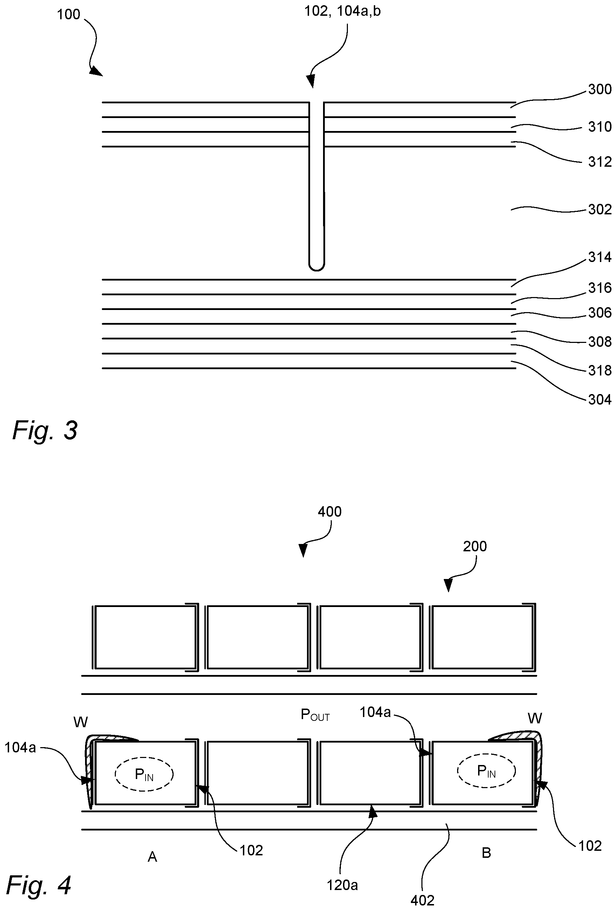

Fig. 3 schematically illustrates a cross-sectional view of the piece of packaging material 100 by way of example. More particularly, it illustrates a cross-sectional view of the first and second set of perforations 102, 104a,b. As illustrated, the piece of packaging material 100 comprises an outer protective layer 300, a cellulose-based mid-layer 302 and an inner protective layer 304. The outer and inner protective layers 300, 304 may be polymer-based layer. The cellulose-based mid-layer 302 may be a carton layer.

As illustrated, the first and second set of perforations 102, 104a,b may extend through the outer protective layer 300, arranged to face an environment outside the package 200, and part of the cellulose-based mid-layer 302. More particularly, the first and second set of perforations 102, 104a,b may extend through 75% or more of the cellulose-based mid-layer 302. The same holds true for the third set of perforations 126 in case such set of perforations is added to the piece of packaging material 100.

The first set of perforations 102 may extend as continuous perforations through the outer protective layer 300 into the cellulose-based mid-layer 304.

The second set of perforations 104a,b may extend as continuous perforations through the outer protective layer 300 into the cellulose-based mid-layer 302.

A used herein, "continuous perforations" refers to a series of perforations that extend uninterrupted through all layers positioned between the outer protective layer 300 and the cellulose-based mid-layer 304, ensuring a consistent and unbroken path through each intermediate layer, if any are present. This continuity of perforation ensures that the perforation path is not interrupted or obstructed by any potential layers located between the outer and mid-layers.

In the example illustrated, a polyamide layer 306 is provided between the cellulose-based mid-layer 302 and the inner protective layer 304, arranged to face the food product FP. Further, an aluminum foil 308 can be provided between the cellulose-based mid-layer 302 and the inner protective layer 304. In case both the polyamide layer 306 and the Aluminum foil 308 are provided, the Aluminum foil 308 can be provided between the polyamide layer 306 and the inner protective layer 304.

In addition, a polypropylene adhesive layer 310 may be provided between the outer protective layer 300 and an ink layer 312. The ink layer 312 may in turn be provided between the polypropylene adhesive layer 310 and the cellulose-based mid-layer 302, as illustrated. A polypropylene layer 314 may be also be provided between the cellulose-based mid-layer 302 and the polyamide layer 306. Between the polypropylene layer 314 and the polyamide layer 306, a polypropylene adhesive layer 316 may be provided. Further, a polypropylene adhesive layer 318 may be provided between the inner protective layer 308 and the Aluminum foil 308.

As illustrated, the first set of perforations 102 as well as the second set of perforations 104a,b, and also the third set of perforations 126 may have a well-defined depth. To provide for that precise depth and also distinct perforations are obtained, laser cutting can be used.

Fig. 4 illustrates by way of example a number of packages 200 provided in the retorting apparatus 400. As illustrated, the packages 200 are placed on a rack 402. To provide for that the risk that the first and second set of perforations 102, 104a,b are covered by water W is reduced, the packages 200 can be placed to rest on their side panels 120a. Even though the retorting apparatus 400 is illustrated and presented in this example, other heat treatment apparatuses may also be applied.

As described above, during the heat treatment, e.g. during cooling, there may be a pressure difference between an outside pressure P_{OUT}, that is, a pressure inside a compartment of the retorting apparatus 400 arranged to hold the packages 200, and an inside pressure P_{IN}, that is, a pressure inside the packages 200. As an effect of this pressure difference, the water W placed on the first or second set of perforations 102, 104a,b may be absorbed by the cellulose-based mid-layer 302. Put differently, due to the pressure difference, the water W, which may be in the form of a water film, may be sucked into the cellulose-based mid-layer 302 via the first and second sets of perforations 102, 104a,b. However, having two set of perforations spaced apart from one another, this risk is lowered. In case there is one set of perforations not covered by the water W, the pressure difference may namely be adjusted by having air, or gas, flowing through non-water covered perforations instead of water covered perforations. As an effect, the water W is not absorbed by the cellulose-based mid-layer 302, and the risk of having deteriorated packages during the heat treatment can be reduced.

By way of example, in situation A, the package 200 has the second set of perforations 104a covered by the water W, while the first set of perforations 102 are not covered by the water W. As an effect, the pressure difference can be compensated for by having the air, or gas, flowing through the first set of perforations 102. As an effect, the package 200 is not damaged even though this was partly covered by the water W during the heat treatment. Another example, in situation B, the package 200 has the first set of perforations 102 covered by the water W, but not the second set of perforations 104a. Similar to the situation A, by having one set of perforations not covered by the water W, the pressure difference can be compensated for without the unwanted effect of having the water W sucked into the cellulose-based mid-layer 302.

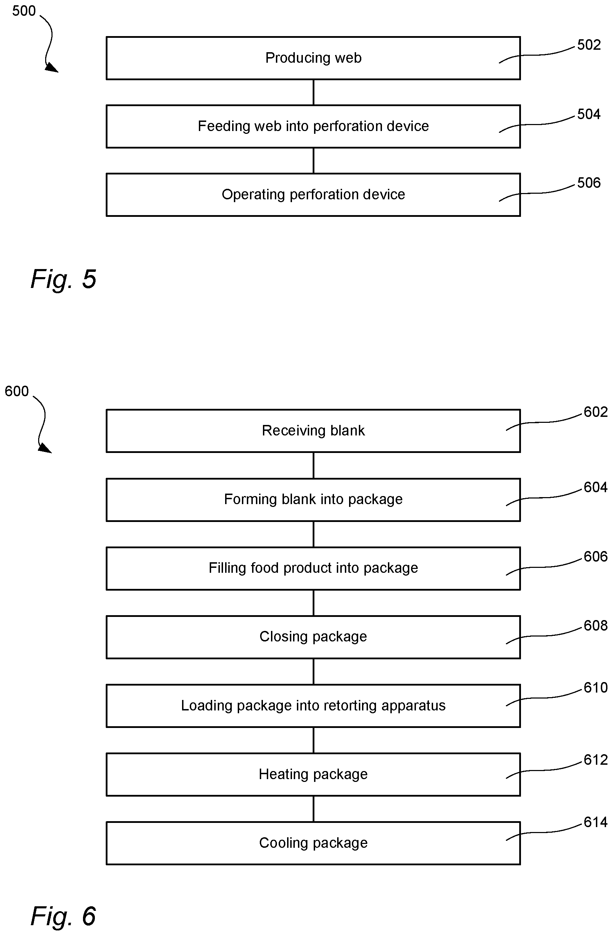

Fig. 5 is a flowchart illustrating a method 500 for producing the piece of packaging material 100 illustrated in fig. 1. The method 500 can comprise producing 502 a web of consecutive pieces by attaching the outer protective layer 300 and the inner protective layer 304 to the cellulose-based mid-layer 302.Thereafter, feeding 504 the web into a perforation device, and operating 506 the perforation device such that the first and the second set of perforations 102, 104a,b extending through the outer protective layer 300 into the cellulose-based mid-layer 302 are provided for each piece 100. The first set of perforations 102 can be provided in the top fin section 110. The second set of perforations 104a,b can be provided outside the top fin section 110. As an effect, a risk that the water W provided on the package 200, formed from the piece of packaging material 100, is sucked into the cellulose-based mid-layer 302 in case the inside pressure P_{IN} of the package 200 is lower than the outside pressure P_{OUT} can be reduced.

The perforation device may be a laser cutting device.

Fig. 6 illustrates a method for producing the package 200 filled with the food product FP. The method can comprise receiving 602 the piece of packaging material 100, forming 604 the piece 100 into the package 200 with one end open, filling 606 the food product FP into the package 200 via the open end, and closing 608 the open end of the package 200 such that a sealed package 200 is formed. Then, loading 610 the package 200 into the retorting apparatus 400, heating 612, in the retorting apparatus 400, the package 200 and the food product FP held in the package 200 such that microorganisms on the package 200 or in the food product FP are killed off, and cooling 614, in the retorting apparatus 400, the package 200 and the food product FP held in the package 200 by applying water W onto the package 200. The cooling 614 can provide for that a pressure difference is formed between an inside pressure P_{IN} of the package 200 and an outside pressure P_{OUT} in the retorting apparatus 400. The risk that the water W provided on the package 200 is sucked into the cellulose-based mid-layer 302 as an effect of the pressure difference can be reduced since a likelihood of having a direct contact between air outside the package 200 and the cellulose-based mid-layer 302 is increased by having two sets of perforations 102, 104a,b placed in different sections of the package 200.

The loading 610 of the package 200 into the retorting apparatus 400 can comprise loading the package 200 together with other packages 200 onto the rack 402 which may comprise several floors, each floor may comprise horizontal rows and columns of packages, before being fed into the retorting apparatus 400, wherein the packages 200 are placed to rest on one of their side panels 120a,b.

The packages 200, while placed on the rack 402, may be horizontally spaced 2 cm or less from each other.

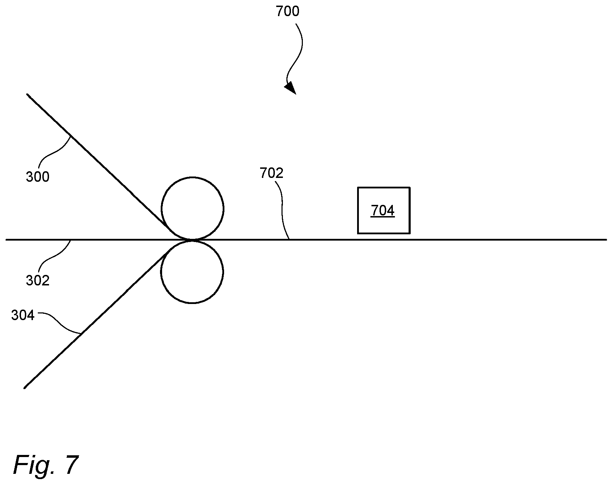

Fig. 7 illustrates schematically a system 700 for producing the piece of packaging material 100 illustrated in fig. 1. As illustrated, the web 702 of packaging material can be provided. The web 702 may comprise the cellulose-based mid-layer 302. To form the packaging material, the outer protective layer 300 may be provided on one side of the cellulose-based mid-layer 300 and the inner protective layer 304 may be provided on the other side of the cellulose-based mid-layer 300. As illustrated in fig. 3, additional layers may also be provided. The different layers may be provided in several different stations. Once the different layer of the packaging material have been combined, the web 7020 may be fed to the perforation device 704. In the perforation device 704, which may be the laser cutting device, the first and second set of perforations 102, 104a,b can be provided. Even though illustrated as one perforation device, another alternative is to have several perforation devices working in parallel or subsequently.

From the description above follows that, although various embodiments of the invention have been described and shown, the invention is not restricted thereto, but may also be embodied in other ways within the scope of the subject-matter defined in the following claims.

## Claims

1. A piece of packaging material (100) for producing a heat-treatable package (200), said piece (100) comprising
an outer protective layer (300),
a cellulose-based mid-layer (302),
an inner protective layer (304),
a first set of perforations (102) extending through the outer protective layer (300) into the cellulose-based mid-layer (304),
a second set of perforations (104a,b) extending through the outer protective layer (300) into the cellulose-based mid-layer (302),
wherein the first and second set of perforations (102, 104a,b) provide for that air is allowed to enter into the cellulose-based mid-layer (302),
wherein the first set of perforations (102) is provided in a top fin section (110), wherein the second set of perforations (104a,b) is provided outside the top fin section (110).

2. The piece (100) according to claim 1, wherein the first set of perforations (102) is further arranged to form a tearing line for facilitating opening of the package (200) by tearing along the tearing line.

3. The piece (100) according to any one of the preceding claims, wherein the second set of perforations (104a,b) is placed in a bottom fin section (114) or a bottom panel section (116) of the piece (100).

4. The piece (100) according to claim 3, wherein the second set of perforations (104a,b) is placed in the bottom fin section (114) or the bottom panel section (116) such that the second set of perforations (104a,b) are at least partly covered by a bottom flap (124) once the piece (100) is formed into the package (200).

5. The piece (100) according to any one of the preceding claims, wherein a third set of perforations (126) is placed in a top panel section (112) such that the third set of perforations (126) is at least partly covered by a top flap (128) once the piece (100) is formed into the package (200).

6. The piece (100) according to any one of the preceding claims, wherein the piece (100) further comprises a polyamide layer (306) placed between the cellulose-based mid-layer (302) and the inner protective layer (304), wherein the polyamide layer (306) is void of any perforations of the first or second set of perforations (102, 104a,b).

7. The piece (100) according to any one of the preceding claims, wherein the piece (100) further comprises an Aluminum foil (308) placed between the cellulose-based mid-layer (302) and the inner protective layer (304), wherein the Aluminum foil (308) is void of any perforations of the first or second set of perforations (102, 104a,b).

8. The piece (100) according to any one of the preceding claims, wherein the first and second set of perforations (102, 104a,b) are provided by using laser cutting.

9. The piece (100) according to any one of the preceding claims, wherein the first and second set of perforations (102, 104a,b) are separated, and the first set of perforations (102) extends in a first direction (D1) and the second set of perforations (104a) extends in a second direction (D2), wherein the first and second directions (D1, D2) are parallel.

10. A method (500) for producing a piece of packaging material (100) that can be formed into a heat-treatable package (200), said method comprising
producing (502) a web (702) of consecutive pieces (100) by attaching an outer protective layer (300) and an inner protective layer (304) to a cellulose-based mid-layer (302),
feeding (504) the web (702) into a perforation device (704),
operating (506) the perforation device (704) such that a first and a second set of perforations (102, 104a,b) extending through the outer protective layer (300) into the cellulose-based mid-layer (302) are provided for each piece (100), wherein the first set of perforations (102) is provided in a top fin section (110), wherein the second set of perforations (104a,b) is provided outside the top fin section (110),
thereby reducing a risk that water (W) provided on the package (200) is sucked into the cellulose-based mid-layer (302) in case an inside pressure (P_{IN}) of the package (200) is lower than an outside pressure (P_{OUT}).

11. The method (500) according to claim 10, wherein the perforation device (704) is a laser cutting device.

12. A heat treatable package (200) produced from a piece (100) according to the method according to claim 10 or 11.

13. A method (600) for producing a package (200) filled with a food product (FP), said method comprising
receiving (602) a piece of packaging material (100) according to any one of the claims 1 to 9,
forming (604) the piece (100) into the package (200) with one end open,
filling (606) the food product (FP) into the package (200) via the open end, closing (608) the open end of the package (200) such that a sealed package (200) is formed,
loading (610) the package (200) into a retorting apparatus (400),
heating (612), in the retorting apparatus (400), the package (200) and the food product (FP) held in the package (200) such that microorganisms on the package (200) or in the food product (FP) are killed off,
cooling (614), in the retorting apparatus (400), the package (200) and the food product (FP) held in the package (200) by applying water (W) onto the package (200),
wherein the cooling (614) provides for that a pressure difference is formed between an inside pressure (P_{IN}) of the package (200) and an outside pressure (P_{OUT}) in the retorting apparatus (400),
wherein the risk that the water (W) is provided on the package (200) is sucked into the cellulose-based mid-layer (302) as an effect of the pressure difference is reduced since a likelihood of having a direct contact between air outside the package (200) and the cellulose-based mid-layer (302) is increased by having two sets of perforations (102, 104a,b) placed in different sections of the package (200).

14. The method (600) according to claim 13, wherein the loading (610) of the package (200) into the retorting apparatus (400) comprises loading the package (200) together with other packages (200) onto a rack (402) comprising several floors, each floor comprising horizontal rows and columns of packages, before being fed into the retorting apparatus (400), wherein the packages (200) are placed to rest on one of their side panels (120a,b).

15. The method (600) according to claim 14, wherein the packages (200) are horizontally spaced 2 cm or less from each other.
